# FASCICULE DE BREVET EUROPEEN

(11) **EP 1 702 541 B1**
(45) Date de publication et mention de la délivrance du brevet: **02.09.2009**
(21) Numéro de dépôt: 06356019.7
(22) Date de dépôt: 22.02.2006
(51) Int. Cl.: A47J 19/02

(54) **Presse-agrumes à bras articulé portant un élément de pressage**
Fruchtpresse mit Gelenkarm mit einem Presselement
Fruit squeezer having an articulated arm with a pressing memeber

(30) Priorité: 17.03.2005 FR 0502638
(43) Date de publication de la demande: 20.09.2006
(73) Titulaire: SEB S.A., 69130 Ecully (FR)
(72) Inventeur: Durris, Cyril, 65690 Montignac (FR); David, Laurent, 65000 Tarbes (FR); Suberbie, Marc, 65000 Tarbes (FR)
(74) Mandataire: Kiehl, Hubert

(56) Documents cités:
- WO-A-20/05041732
- FR-A- 2 649 878

## Description

La présente invention concerne le domaine technique des presse-agrumes et se rapporte plus particulièrement aux presse-agrumes à bras articulé et à cône rotatif comportant un élément prévu pour venir appuyer sur la partie supérieure du demi-agrume placé sur le cône rotatif.

Il est connu du document FR 1 164 016 ou du document FR 2 649 878, des presse-agrumes munis d'un moteur électrique entraînant un cône rotatif et munis d'un bras supérieur articulé sur lequel est rigidement fixé, selon un angle constant par rapport au bras, un élément de pressage de forme approximativement conique destiné à appuyer et maintenir le demi-agrume sur le cône rotatif.

Cependant de tels presse-agrumes présentent l'inconvénient d'avoir un élément de pressage faisant pivoter le demi-agrume lors de l'abaissement du bras, l'élément de pressage étant fixe par rapport au bras monté articulé et présentant, de ce fait, au cours de l'abaissement du bras, un axe différent de celui du demi-agrume. Le demi-agrume, déplacé de sa position initiale, n'est pas pressé sur toute sa surface intérieure, le rendement de pressage est alors réduit.

Un presse-agrumes selon le préambule de la revendication 1 est connu du document WO2005/041732.

Le but de la présente invention est de remédier à ces inconvénients et de proposer un presse-agrumes à bras monté articulé évitant le basculement du demi-agrume lors de l'abaissement du bras de manière à augmenter le rendement de pressage.

Un autre but de l'invention est de réaliser aisément un presse-agrumes qui soit simple, économique et facile à utiliser.

Ces buts sont atteints avec un presse-agrumes selon les caractéristiques de la revendication 1.

Un tel presse-agrumes présente un élément de pressage dont l'angle d'attaque s'adapte à la position et à la taille du demi-agrume, à partir du contact avec celui - ci, lors de l'abaissement du bras. Ainsi, le demi-agrume n'est pas déplacé par l'élément de pressage vis-à-vis de l'axe de l'organe rotatif d'extraction du jus et l'extraction du jus peut être pratiquée sur toute sa surface intérieure sans nécessité de tenue à la main du demi-agrume.

Avantageusement, l'axe de pivotement de l'élément de pressage vis-à-vis du bras est parallèle à l'axe de pivotement du bras vis-à-vis du boîtier.

En effet, dans un presse-agrumes comprenant un élément de pressage fixé rigidement à un bras, l'élément de pressage dispose d'un seul degré de liberté par rapport au boîtier, correspondant au pivotement du bras par rapport au boîtier. De manière à éviter le basculement du demi-agrume, l'élément de pressage doit être pivoté selon un axe parallèle à celui du pivotement de l'élément de pressage pouvant provoquer un basculement de l'agrume.

De préférence, l'élément de pressage est monté mobile contre un moyen de rappel.

Ainsi, après son déplacement, l'élément de pressage est replacé en position initiale de manière à ne pas déplacer lors de la remontée du bras le demi-agrume pressé, et de manière à ce que le presse-agrumes soit opérationnel pour un nouvel abaissement du bras.

Avantageusement, le moyen de rappel exerce un effort de rappel vers l'axe de pivotement du bras vis-à-vis du boîtier. En effet, le déplacement de l'élément de pressage lors de l'abaissement du bras se fait dans le sens opposé à l'articulation du bras vis-à-vis du boîtier, de manière à adapter l'angle d'attaque de l'élément de pressage à la position et à la taille du demi-agrume.

Avantageusement, l'élément de pressage est monté amovible par rapport au bras. Alors, selon une forme de réalisation, le bras comporte deux éléments de pivotement aptes à être insérés dans deux encoches en L ménagées sur une tête de l'élément de pressage.

Ainsi, l'élément de pressage est monté pivotant par rapport au bras autour de deux éléments de pivotement selon un assemblage de pièces simples à réaliser et à monter. De plus, grâce à cet assemblage selon un accrochage à baïonnette, l'élément de pressage peut être démonté facilement.

Avantageusement, la tête de l'élément de pressage est tubulaire.

La forme tubulaire de l'élément de pressage au niveau de la partie le liant au bras permet de faciliter le démontage de l'élément de pressage par rotation.

Avantageusement, les deux éléments de pivotement du bras forment un essieu.

En effet, les deux éléments de pivotement peuvent former un seul élément pour des commodités de construction et d'assemblage des pièces.

Selon une autre caractéristique du presse-agrumes, l'organe rotatif d'extraction du jus forme un cône de pressage comportant une paroi latérale présentant des conformations en relief et un sommet présentant un plot.

La forme de l'organe rotatif d'extraction du jus lui permet de s'adapter à la forme du demi-agrume et d'extraire le jus le plus profondément possible. Les conformations en relief de la paroi latérale du cône de pressage permettent une pénétration plus profonde de l'organe rotatif d'extraction du jus et un creusage optimal. Le plot permet une meilleure tenue du demi-agrume qui s'embroche sur celui-ci.

Avantageusement, l'élément de pressage présente un logement prévu pour recevoir le plot de l'organe rotatif d'extraction du jus.

Ainsi, lorsque le bras est totalement abaissé, le plot se logeant dans l'orifice permet d'optimiser le guidage de l'élément de pressage au dessus de l'organe rotatif d'extraction du jus.

De plus, il permet à l'élément de pressage de coiffer le cône rotatif avec un plus faible espace, ce qui peut être particulièrement utile dans le cas d'agrumes à faible épaisseur de peau.

Selon une autre caractéristique du presse-agrumes, l'élément de pressage présente une forme de cloche.

La forme en cloche s'adapte à la forme du demi-agrume de manière à optimiser la pression exercée sur le demi-agrume contre l'organe rotatif d'extraction du jus.

Avantageusement, au moins une découpe est ménagée au niveau de la paroi de l'élément de pressage.

Lors de l'abaissement du bras, une ou plusieurs découpes facilitent l'engagement du demi-agrume au niveau de l'élément de pressage, quelle que soit sa taille.

Avantageusement, la ou l'une des découpes est agencée du coté de l'axe de pivotement du bras vis-à-vis du boîtier.

Lors de l'abaissement du bras, cette découpe facilite l'accostage de l'élément de pressage sur le demi-agrume, quelle que soit sa taille.

Avantageusement, l'élément de pressage présente des languettes.

En comparaison d'une paroi pleine, des languettes permettent un gain d'élasticité et ainsi une meilleure adaptation de l'élément de pressage selon sa position et selon la taille du demi-agrume, tout en le maintenant suffisamment.

Avantageusement, des nervures sont ménagées sur la paroi interne de l'élément de pressage.

Ces nervures permettent un meilleur accrochage du demi-agrume sur l'élément de pressage, lui évitant ainsi de glisser par rapport à la paroi interne de l'élément de pressage et de tourner avec l'organe rotatif d'extraction du jus.

Avantageusement, des pics sont ménagés sur la paroi interne de l'élément de pressage.

Ces pics se plantent dans la peau du demi-agrume pour optimiser le maintien du demi-agrume par l'élément de pressage et éviter au demi-agrume de se mettre en rotation.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue de coté en perspective du presse-agrumes, le bras en position relevée;
- la figure 2 est une vue de dessous en perspective d'une partie du bras;
- la figure 3 est une vue de coté en perspective de l'élément de pressage;
- la figure 4 est une vue de dessous de l'élément de pressage.

Seuls les éléments nécessaires à la compréhension de l'invention ont été représentés. Pour faciliter la lecture des dessins les mêmes éléments portent les mêmes références d'une figure à l'autre.

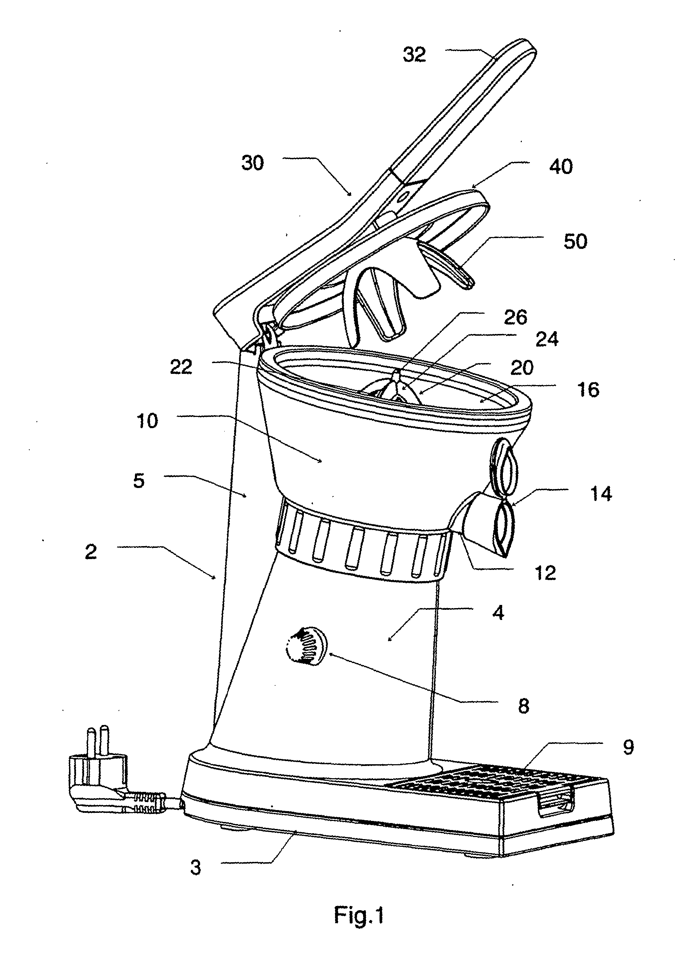

La figure 1 représente un presse-agrumes comportant un boîtier 2 incluant un moteur électrique et supportant un réceptacle à jus 10 dans lequel sont disposés un filtre 16 et un organe rotatif d'extraction du jus 20.

Le boîtier 2 est surmonté par un bras 30 monté articulé, le bras 30 portant un couvercle 40 prévu pour fermer le réceptacle à jus 10 et un élément de pressage 50 apte à maintenir et à appuyer le demi-agrume placé préalablement sur l'organe rotatif d'extraction du jus 20.

Le boîtier 2 comprend une base 3, un corps 4 et un montant 5. La base 3 est en contact, par l'intermédiaire de pieds, avec le plan de travail sur lequel est placé le presse-agrume.

Le montant 5, élément vertical surmontant la base 3, porte en son extrémité supérieure le bras 30.

Le corps 4, surmontant également la base 3, a la forme d'un cylindre vertical légèrement évasé portant sur sa paroi externe un bouton rotatif de commande 8. Le corps 4 est placé sur la base 3 du boîtier 2, entre le montant 5 et un socle 9 prévu pour recevoir un récipient de récupération du jus. Ce récipient, ne faisant pas partie du presse-agrumes, n'est pas représenté sur les figures.

En son bord supérieur, le corps 4 du boîtier 2 est surmonté par le réceptacle à jus 10 monté de manière amovible au corps 4 au moyen d'un quart de tour.

Le réceptacle à jus 10 présente un bec verseur 12 de forme cylindrique légèrement orienté en direction du socle 9 de la base 3 du boîtier 2, le bec verseur 12 étant muni d'un embout rabattable 14.

Le réceptacle à jus 10 reçoit, en sa cavité intérieure, un filtre 16. Le réceptacle à jus 10 et le filtre 16 laissent passer un arbre d'entraînement lié au moteur électrique sur lequel est placé l'organe rotatif d'extraction du jus 20.

L'organe rotatif d'extraction du jus 20 est destiné à recevoir le demi-agrume. L'organe rotatif d'extraction du jus 20 forme un cône de pressage 22 comportant une paroi latérale présentant des conformations en relief 24 formées de quatre premiers renflements verticaux équidistants partant du sommet du cône de pressage 22 et couvrant une partie de la hauteur du cône de pressage 22 et de quatre autres renflements verticaux moins proéminents intercalés entre les quatre premiers renflements. L'ensemble de ces renflements verticaux est destiné à creuser profondément le demi-agrume de manière à en extraire un maximum de jus.

L'organe rotatif d'extraction du jus 20 présente un sommet présentant un plot 26 s'enfonçant dans le demi-agrume et traversant une partie ou la totalité de la peau du demi-agrume.

Tel que visible sur la figure 1, l'organe rotatif d'extraction du jus 20 présente un axe de rotation s'étendant en direction de l'élément de pressage 50.

Le bras 30 est articulé de manière indémontable sur le montant 5 du boîtier 2.

Le bras 30 est recouvert en son extrémité non liée au montant 5, d'un tube 32 correspondant à la partie du bras à prendre en main. Ce tube peut être dans un matériau moins rigide que l'ensemble du bras, tel que du plastique Polypropylène PP.

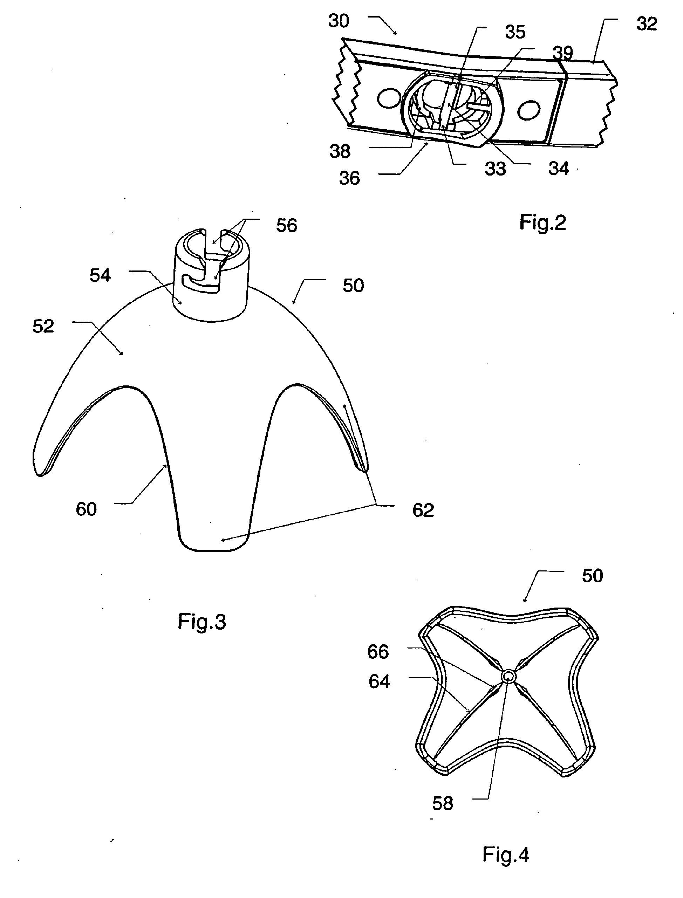

Au niveau de sa partie non recouverte par le tube 32 , le bras 30 présente, en sa face en regard de l'ouverture du réceptacle de jus 10, une zone 36 de montage du couvercle 40 et de l'élément de pressage 50, illustré à la figure 2.

Le bras 30 présente au niveau de la zone 36, deux éléments de pivotement 33 et 35 formant un essieu 34 autour duquel est monté pivotant l'élément de pressage 50. L'essieu 34 formant l'axe de pivotement de l'élément de pressage 50, est parallèle à l'axe de pivotement du bras 30 vis-à-vis du boîtier 2, de manière à ce que l'élément de pressage 50 puisse pivoter dans un plan médian vertical au bras 30.

Le bras 30 présente également au niveau de la zone 36, perpendiculairement à l'essieu 34 et placé du coté du tube 32, un moyen de rappel 39 formé d'un ressort à lame.

Le bras 30 présente également au niveau de la zone 36, une zone 38 de montage du couvercle 40. Avantageusement, le couvercle 40 est réalisé dans une matière plastique transparente. Ainsi, l'élément de pressage est monté mobile contre le moyen de rappel 39. Le moyen de rappel 39 exerce un effort de rappel vers l'axe de pivotement du bras 30 vis-à-vis du boîtier 2.

L'élément de pressage 50 est lié au bras 30 au travers du couvercle 40.

L'élément de pressage 50, illustré dans les figures 3 et 4, a une forme de cloche 52 surmontée d'une tête 54 tubulaire s'insérant dans la zone 36 du bras 30. Les deux encoches en L56, diamétralement opposées, sont ménagées sur la tête 54. Les deux éléments de pivotement 33, 35 formant l'essieu 34 sont aptes à être insérés dans les deux encoches en L 56. Ainsi, l'élément de pressage 50 est monté pivotant par rapport au bras 30.

L'élément de pressage 50 est amovible par rapport au bras 30 par une rotation de celui-ci, les encoches en L 56 et l'essieu 34 formant un accrochage à baïonnette.

L'élément de pressage 50 présente des découpes 60 agencées au niveau du bord inférieur de la cloche 52. Les découpes 60 forment des languettes 62 au niveau du bord inférieur de la cloche 52.

Les découpes 60 et les languettes 62 sont avantageusement au nombre de quatre.

La découpe 60 agencée du coté de l'axe de pivotement du bras 30 vis-à-vis du boîtier 2 facilite l'accostage de l'élément de pressage 50 sur le demi-agrume.

En comparaison d'une paroi pleine, les languettes 62 permettent un gain d'élasticité favorisant l'adaptation de l'élément de pressage 50 selon sa position et selon la taille du demi-agrume tout en le maintenant suffisamment. De plus, de manière à augmenter l'élasticité au niveau des languettes 62, l'élément de pressage 50 est avantageusement réalisé en plastique Polypropylène PP, plastique plus souple que l'ABS par exemple.

Au niveau de la paroi interne de la cloche 52, l'élément de pressage 50 présente quatre nervures verticales 64, illustrées à la figure 5. Le long des languettes 62, ces nervures présentent des pics 66 à l'extrémité des nervures verticales 64. Les pics 66 sont proches du sommet de la cloche 52 et se plantent dans la peau du demi-agrume pour optimiser son maintien, ils sont par conséquent placés à distance des languettes 62 de manière à ne pas les rigidifier.

Au niveau du sommet de la paroi interne de la cloche 52, l'élément de pressage 50 présente un logement 58 prévu pour recevoir le plot 26 de l'organe rotatif d'extraction du jus 20 lorsque le bras 30 est abaissé.

La présente invention fonctionne et s'utilise de la manière suivante.

La mise sous tension du moteur électrique est déclenchée par le déplacement axial de l'organe rotatif d'extraction du jus 20 généré par l'abaissement du bras 30.

En effet, l'utilisateur place le demi-agrume au dessus de l'organe rotatif d'extraction du jus 20, le presse-agrume étant sous tension, puis, abaisse le bras 30, ce qui génère, par l'intermédiaire du demi-agrume, le déplacement axial de l'organe rotatif d'extraction du jus 20 qui provoque le démarrage du moteur électrique.

Lors de l'abaissement du bras, l'élément de pressage 50 entre en contact avec le demi-agrume. Grâce à l'articulation de l'élément de pressage 50 par rapport au bras 30, l'angle d'attaque de l'élément de pressage 50 s'adapte à la position et à la taille du demi-agrume de manière à entourer et maintenir le demi-agrume et à éviter son basculement. Ainsi, l'extraction du jus est pratiquée sur toute la surface intérieure du demi-agrume c'est-à-dire avec un bon rendement de pressage.

Lorsque l'utilisateur relève le bras, l'élément de pressage 50 est replacé dans sa position initiale par rapport au bras 30 grâce au moyen de rappel 39. L'utilisateur peut enlever le demi-agrume pressé ; le presse-agrumes est alors prêt à être utilisé pour le pressage d'un autre demi-agrume ou à être nettoyé en enlevant l'élément de pressage 50 du bras 30.

A titre de variante, il est possible d'envisager un organe rotatif d'extraction du jus mis en rotation suite à l'actionnement d'un interrupteur quelle que soit la position du bras.

A titre de variante, d'autres types d'articulation de l'élément de pressage vis-à-vis du bras peuvent être également envisagées selon une articulation similaire à celle présentée ci-dessus, tel que par exemple avec un essieu placé sur l'élément de pressage et un bras présentant des encoches de pivotement.

A titre de variante, il est possible d'envisager l'assemblage de l'élément de pressage au bras avec une articulation de type rotule.

A titre de variante, l'organe rotatif d'extraction du jus pourrait être monté sur un corps d'appareil indépendant de la base et du montant du boîtier sur lequel est monté pivotant le bras portant l'élément de pressage.

Il est également possible d'imaginer une butée limitant le pivotement de l'élément de pressage par rapport au bras.

L'élément de pressage étant amovible, à titre de variante, il est possible d'imaginer un jeu de plusieurs éléments de pressage de différentes tailles, par exemple l'un étant plus adapté à des citrons, l'autre plus adapté à des pamplemousses.

A titre de variante, il est possible d'envisager le même dispositif sans le couvercle.

L'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Presse-agrumes comprenant un boîtier (2) prévu pour recevoir un organe rotatif d'extraction du jus (20), un bras (30) étant monté articulé sur le boîtier (2), le bras (30) portant un élément de pressage (50) d'un demi-agrume contre l'organe rotatif d'extraction du jus (20), l'élément de pressage (50) étant monté pivotant par rapport au bras (30), **caractérisé en ce que** le pivotement de l'élément de pressage (50) par rapport au bras (30) est indépendant du pivotement du bras (30) par rapport au boîtier (2).

2. Presse-agrumes selon la revendication 1, **caractérisé en ce que** l'axe de pivotement de l'élément de pressage (50) vis-à-vis du bras (30) est parallèle à l'axe de pivotement du bras (30) vis-à-vis du boîtier (2).

3. Presse-agrumes selon une des revendications précédentes, **caractérisé en ce que** l'élément de pressage (50) est monté mobile contre un moyen de rappel (39).

4. Presse-agrumes selon la revendication 3, **caractérisé en ce que** le moyen de rappel (39) exerce un effort de rappel vers l'axe de pivotement du bras (30) vis-à-vis du boîtier (2).

5. Presse-agrumes selon une des revendications précédentes, **caractérisé en ce que** l'axe de pivotement de l'élément de pressage (50) par rapport au bras (30) est parallèle à l'axe de pivotement du bras (30) par rapport au boîtier (2).

6. Presse-agrumes selon une des revendications précédentes, **caractérisé en ce que** le bras (30) comporte deux éléments de pivotement (33, 35) aptes à être insérés dans deux encoches en L (56) ménagées sur une tête (54) de l'élément de pressage (50).

7. Presse-agrumes selon la revendication 6, **caractérisé en ce que** la tête (54) de l'élément de pressage (50) est tubulaire.

8. Presse-agrumes selon les revendications 6 ou 7, **caractérisé en ce que** les deux éléments de pivotement du bras (30) forment un essieu (34).

9. Presse-agrumes selon une des revendications précédentes, **caractérisé en ce que** l'organe rotatif d'extraction du jus (20) forme un cône de pressage (22) comportant une paroi latérale présentant des conformations en relief (24) et un sommet présentant un plot (26).

10. Presse-agrumes selon la revendication 9, **caractérisé en ce que** l'élément de pressage (50) présente un logement (58) prévu pour recevoir le plot (26) de l'organe rotatif d'extraction du jus (20).

11. Presse-agrumes selon une des revendications précédentes, **caractérisé en ce que** l'élément de pressage (50) présente une forme de cloche (52).

12. Presse-agrumes selon une des revendications précédentes, **caractérisé en ce que** au moins une découpe (60) est ménagée au niveau de la paroi de l'élément de pressage (50).

13. Presse-agrumes selon la revendication 12, **caractérisé en ce que** la ou l'une des découpes (60) est agencée du coté de l'axe de pivotement du bras (30) vis-à-vis du boîtier (2).

14. Presse-agrumes selon une des revendications précédentes, **caractérisé en ce que** l'élément de pressage (50) présente des languettes (62).

15. Presse-agrumes selon une des revendications précédentes, **caractérisé en ce que** des nervures (64) sont ménagées sur la paroi interne de l'élément de pressage (50).

16. Presse-agrumes selon une des revendications précédentes, **caractérisé en ce que** des pics (66) sont ménagés sur la paroi interne de l'élément de pressage (50).

17. Presse-agrumes selon une des revendications précédentes, **caractérisé en ce que** l'organe rotatif d'extraction du jus (20) présente un axe de rotation s'étendant en direction de l'élément de pressage (50).

## Claims

1. A citrus juicer comprising a housing (2) designed to receive a rotary juice-extractor member (20), an arm (30) being hinge-mounted on the housing (2), the arm (30) carrying a press element (50) for pressing half a citrus fruit against the rotary juice-extractor member (20), the press element (50) being mounted to pivot relative to the arm (30), said citrus juicer being **characterized in that** the pivoting of the press element (50) relative to the arm (30) is independent of the pivoting of the arm (30) relative to the housing (2).

2. A citrus juicer according to claim 1, **characterized in that** the pivot axis about which the press element (50) pivots relative to the arm (30) is parallel to the pivot axis about which the arm (30) pivots relative to the housing (2).

3. A citrus juicer according to any preceding claim, **characterized in that** the press element (50) is mounted to move against return means (39).

4. A citrus juicer according to claim 3, **characterized in that** the return means (39) exert a return force towards the pivot axis about which the arm (30) pivots relative to the housing (2).

5. A citrus juicer according to any preceding claim, **characterized in that** the pivot axis about which the press element (50) pivots relative to the arm (30) is parallel to the pivot axis about which the arm (30) pivots relative to the housing (2).

6. A citrus juicer according to any preceding claim, **characterized in that** the arm (30) is provided with two pivot elements (33, 35) that are suitable for being inserted into two L-shaped notches (56) provided in a head (54) of the press element (50).

7. A citrus juicer according to claim 6, **characterized in that** the head (54) of the press element (50) is tubular.

8. A citrus juicer according to claim 6 or claim 7, **characterized in that** the two pivot elements of the arm (30) form an axle (34).

9. A citrus juicer according to any preceding claim, **characterized in that** the rotary juice-extractor member (20) forms a press cone (22) having a side wall presenting shapes in relief (24) and a top presenting a stud (26).

10. A citrus juicer according to claim 9, **characterized in that** the press element (50) is provided with a recess (58) designed to receive the stud (26) of the rotary juice-extractor member (20).

11. A citrus juicer according to any preceding claim, **characterized in that** the press element (50) presents a bell-shape (52).

12. A citrus juicer according to any preceding claim, **characterized in that** at least one cutout (60) is provided in the wall of the press element (50).

13. A citrus juicer according to claim 12, **characterized in that** the or one of the cutouts (60) is arranged beside the pivot axis about which the arm (30) pivots relative to the housing (2).

14. A citrus juicer according to any preceding claim, **characterized in that** the press element (50) presents tongues (62).

15. A citrus juicer according to any preceding claim, **characterized in that** ribs (64) are provided on the inside wall of the press element (50).

16. A citrus juicer according to any preceding claim, **characterized in that** ridges (66) are provided on the inside wall of the press element (50).

17. A citrus juicer according to any preceding claim, **characterized in that** the rotary juice-extractor member (20) presents an axis of rotation that extends towards the press element (50).

## Patentansprüche

1. Zitruspresse mit einem Gehäuse (2), das dazu vorgesehen ist, ein drehendes Organ zum Herauspressen des Saftes (20) aufzunehmen, wobei ein Arm (30) gelenkig am Gehäuse (2) angebracht ist, wobei der Arm (30) ein Presselement (50) zum Pressen einer halben Zitrusfrucht gegen das drehende Organ zum Herauspressen des Saftes (20) trägt, wobei das Presselement (50) bezüglich des Arms (30) schwenkbar angebracht ist, **dadurch gekennzeichnet, dass** das Schwenken des Presselements (50) bezüglich des Arms (30) unabhängig vom Schwenken des Arms (30) bezüglich des Gehäuses (2) ist.

2. Zitruspresse nach Anspruch 1, **dadurch gekennzeichnet, dass** die Achse zum Schwenken des Presselements (50) gegenüber dem Arm (30) parallel zur Achse zum Schwenken des Arms (30) gegenüber dem Gehäuse (2) ist.

3. Zitruspresse nach einem der vorhergehenden Ansprüche, **dadurch gekennzeichnet, dass** das Presselement (50) entgegen einem Rückstellmittel (39) beweglich angebracht ist.

4. Zitruspresse nach Anspruch 3, **dadurch gekennzeichnet, dass** das Rückstellmittel (39) eine Rückstellkraft auf die Schwenkachse des Arms (30) gegenüber dem Gehäuse (2) ausübt.

5. Zitruspresse nach einem der vorhergehenden Ansprüche, **dadurch gekennzeichnet, dass** die Achse zum Schwenken des Presselements (50) gegenüber dem Arm (30) parallel zur Achse zum Schwenken des Arms (30) gegenüber dem Gehäuse (2) ist.

6. Zitruspresse nach einem der vorhergehenden Ansprüche, **dadurch gekennzeichnet, dass** der Arm (30) zwei Schwenkelemente (33, 35) aufweist, die in zwei L-förmige Einschnitte (56) eingesetzt werden können, die an einem Kopf (54) des Presselements (50) ausgebildet sind.

7. Zitruspresse nach Anspruch 6, **dadurch gekennzeichnet, dass** der Kopf (54) des Presselements (50) rohrförmig ist.

8. Zitruspresse nach Anspruch 6 oder 7, **dadurch gekennzeichnet, dass** die beiden Schwenkelemente des Arms (30) eine Achse (34) bilden.

9. Zitruspresse nach einem der vorhergehenden Ansprüche, **dadurch gekennzeichnet, dass** drehende Organ zum Herauspressen des Saftes (20) einen Presskegel (22) bildet, der eine Seitenwand mit erhabenen Ausformungen (24) und eine Spitze mit einem Höcker (26) aufweist.

10. Zitruspresse nach Anspruch 9, **dadurch gekennzeichnet, dass** das Presselement (50) eine Aufnahme (58) aufweist, die dazu vorgesehen ist, den Höcker (26) des drehenden Organs zum Herauspressen des Saftes (20) aufzunehmen.

11. Zitruspresse nach einem der vorhergehenden Ansprüche, **dadurch gekennzeichnet, dass** das Presselement (50) die Form einer Glocke (52) aufweist.

12. Zitruspresse nach einem der vorhergehenden Ansprüche, **dadurch gekennzeichnet, dass** mindestens ein Ausschnitt (60) auf der Höhe der Wand des Presselements (50) ausgebildet ist.

13. Zitruspresse nach Anspruch 12, **dadurch gekennzeichnet, dass** der Ausschnitt (60) oder einer der Ausschnitte (60) auf der Seite der Achse zum Schwenken des Arms (30) gegenüber dem Gehäuse (2) angeordnet ist.

14. Zitruspresse nach einem der vorhergehenden Ansprüche, **dadurch gekennzeichnet, dass** das Presselement (50) Zungen (62) aufweist.

15. Zitruspresse nach einem der vorhergehenden Ansprüche, **dadurch gekennzeichnet, dass** Rippen (64) auf der Innenwand des Presselements (50) ausgebildet sind.

16. Zitruspresse nach einem der vorhergehenden Ansprüche, **dadurch gekennzeichnet, dass** Zacken (66) auf der Innenwand des Presselements (50) ausgebildet sind.

17. Zitruspresse nach einem der vorhergehenden Ansprüche, **dadurch gekennzeichnet, dass** das drehende Organ zum Herauspressen des Saftes (20) eine Drehachse aufweist, die sich in Richtung des Presselements (50) erstreckt.
